# EUROPEAN PATENT APPLICATION

(11) **EP 1 720 093 A2**
(43) Date of publication of application: **08.11.2006**
(21) Application number: 06252242.0
(22) Date of filing: 26.04.2006
(51) Int. Cl.: G06F 3/033

(54) **Apparatus and method for displaying file information through geometrical conversion of graphical user interface**

(30) Priority: 02.05.2005 KR 20050036808
(71) Applicant: Samsung Electronics Co., Ltd., Suwon-si, Gyeonggi-Do (KR)
(72) Inventor: Han, Sang-jun, Dongjak-gu Seoul (KR)
(74) Representative: Davies, Robert Ean

(57) **Abstract**

The invention comprises a basic and detailed information extractor for extracting basic and detailed file information respectively. Upon user selection via the display of basic file information, an information changer replaces the basic with the detailed file information while dynamically changing the geometrical appearance of the GUI part where the information is displayed.

## Description

Apparatus and methods consistent with the present invention relate to displaying file information through geographical conversion of a graphical user interface, and more particularly, to geometrically converting basic information on a file selected from among a plurality of files displayed on a screen and displaying detailed information on the selected file.

The graphical user interface (GUI) started with the development of a mouse. A first GUI computer named Alto made by Xerox was equipped with mouse, graphical window, and network features and an operating system supporting them. Double-click and multi-window was used in a computer named Star, the first commercial system further developed from Alto.

After the launch of Star, Apple developed a computer named Lisa in which a menu bar and a pull-down menu were first used. Lisa was commercially successful and known to the public. The GUI was substantially completed with the introduction of Lisa. Thereafter, Apple contributed to the popularization of the GUI through a Macintosh computer.

Microsoft participated in the production of application programs for Macintosh computers and developed an operating system, Windows 1.0, based on technology acquired at that time. Windows 1.0 was a software tool kit, but Windows has been developed into an operating system that is most widely spread all over the world. With the spread of Windows and the introduction of the Internet, the GUI has been further developed. In particular, a GUI providing familiar and intuitive information to users in various environments has been developed and used.

A GUI is used to realize the convenient use of a computer and the fast and intuitive communication of information. A user can move a mouse pointer using a mouse and issue a command to a computer to execute a particular operation by clicking or double-clicking on an icon pointed at by the mouse pointer. In addition, a GUI can be used to display information on a file or other data. At this time, the information may be displayed through a separate dialog box or Help balloon.

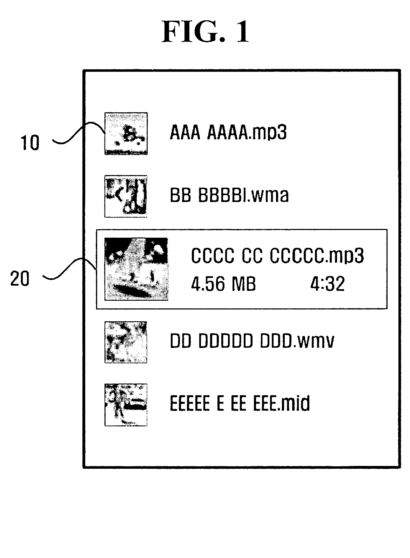

FIG. 1 illustrates a conventional GUI in which display or non-display of detailed information is determined according to the selection of a menu item. In the conventional GUI, the level of information is determined according to the state of a menu item. In detail, when a menu item is in a reduced state (10), simple information like a type of data, e.g., a file name, is displayed. When a menu item is selected by a user and is in an enlarged state (20), a file format, a file size and other additional information as well as a file name are displayed.

However, since information is statically displayed in the conventional GUI, a user cannot be provided with a visual effect and it is difficult to distinctively display the levels of information.

In addition, a device intuitively displaying information to a user using a dynamic interface has been introduced. Pantech & Curitel's PD-6000 mobile phone (launched on November 2002) provides menu items in a shape of a rotating milestone. Although menu items in the shape of a rotating milestone provides a visual effect for a user, only menu items are displayed and detailed information on each menu item is displayed on a new window. Accordingly, it is difficult to intuitively display the interrelationship between each menu item and detailed information.

Therefore, an apparatus and method for providing a dynamic visual effect and displaying information on a selected file by levels are desired.

Embodiments of the present invention provide an apparatus and method for displaying detailed information on stored data through geometrical conversion of a GUI.

Embodiments of the present invention also provide an apparatus and method for displaying detailed information on data by levels according to a geometrical conversion of a GUI.

According to an aspect of the present invention, there is provided an apparatus for displaying file information through geometrical conversion of a graphical user interface, the apparatus including a basic information extractor extracting basic information on a file, a command receiver receiving a display command signal regarding detailed information on the file, a detailed information extractor extracting the detailed information on the file according to the display command signal, an information changer changing the extracted basic information to the extracted detailed information using geometrical conversion, and a display unit displaying at least one among the basic information on the file, a procedure of the geometrical conversion of the basic information, and the detailed information on the file.

According to another aspect of the present invention, there is provided a method of displaying file information through geometrical conversion of a graphical user interface, the method including extracting basic information on a file, receiving a display command signal regarding detailed information on the file, extracting the detailed information on the file according to the display command signal, changing the extracted basic information to the extracted detailed information using geometrical conversion, and displaying at least one among the basic information on the file, a procedure of the geometrical conversion of the basic information, and the detailed information on the file.

For a better understanding of the invention, and to show how embodiments of the same may be carried into effect, reference will now be made, by way of example, to the accompanying diagrammatic drawings in which:
FIG. 1 illustrates a conventional graphical user interface (GUI) in which display or non-display of detailed information is determined according to the selection of a menu item;
FIG. 2 is a block diagram of an apparatus for displaying file information through the geometrical conversion of a GUI according to an exemplary embodiment of the present invention;
FIG. 3 illustrates a "turn-over" among geometrical conversions, according to an exemplary embodiment of the present invention;
FIG. 4 illustrates "horizontal spreading" and "vertical spreading" among geometrical conversions, according to an exemplary embodiment of the present invention;
FIG. 5 illustrates a method of displaying information in the horizontal spreading and the vertical spreading, according to an exemplary embodiment of the present invention;
FIG. 6 illustrates "spreading-in-parallelepiped" according to an exemplary embodiment of the present invention; and
FIG. 7 is a flowchart of a method of displaying file information through the geometrical conversion of GUI according to an exemplary embodiment of the present invention.

Advantages and features of the present invention and methods of accomplishing the same may be understood more readily by reference to the following detailed description of exemplary embodiments and the accompanying drawings. The present invention may, however, be embodied in many different forms and should not be construed as being limited to the exemplary embodiments set forth herein. Rather, these exemplary embodiments are provided so that this disclosure will be thorough and complete and will fully convey the concept of the invention to those skilled in the art, and the present invention will only be defined by the appended claims. Like reference numerals refer to like elements throughout the specification.

The present invention will now be described more fully with reference to the accompanying drawings, in which exemplary embodiments of the invention are shown.

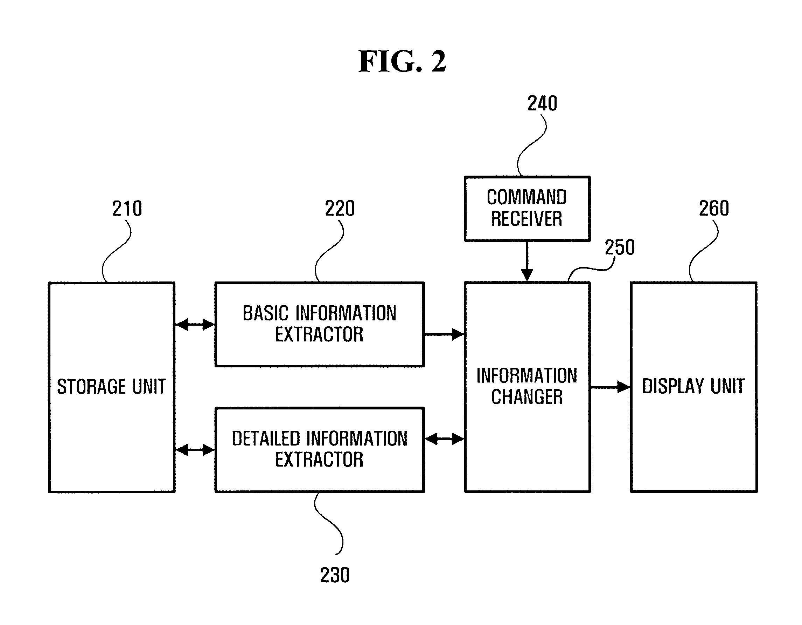

FIG. 2 is a block diagram of an apparatus for displaying file information through the geometrical conversion of GUI according to an exemplary embodiment of the present invention.

Referring to FIG. 2, an apparatus for displaying file information through the geometrical conversion of a GUI according to an exemplary embodiment of the present invention includes a storage unit 210, a basic information extractor 220, a detailed information extractor 230, a command receiver 240, an information changer 250, and a display unit 260.

The storage unit 210 stores basic information and detailed information on a file. The basic information includes at least one of an icon and a name of the file. The icon may be stored in an image format and the name may be stored in a text format. However, it may be preferable that the entire basic information be displayed in a GUI format when it is output through the display unit 260.

The detailed information includes at least one among a file format, a storage position, a file size, a play length, a creation date, and a last use date. Although the detailed information may be stored in a text format, it may be preferable that the entire detailed information be displayed in a GUI format when it is output through the display unit 260.
The file may be a text file or a multimedia file including a still image, a moving image, or music. Accordingly, when the detailed information is output through the display unit 260, it may be different according to a type of file.

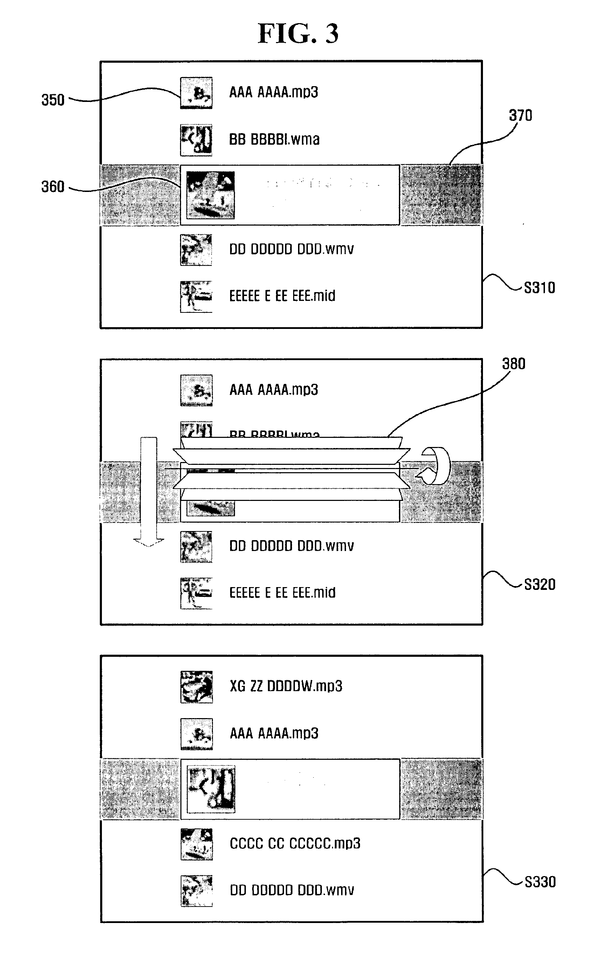

The detailed information may be hierarchically stored by levels. In this situation, the information changer 250 may perform different geometrical conversions according to the levels of the detailed information, which will later be described in detail with reference to FIGS. 3 through 5.

The basic information extractor 220 extracts basic information stored in the storage unit 210. The basic information extractor 220 extracts at least one of the icon and the name of a file.

The storage unit 210 may store basic and detailed information on a plurality of files. The basic information extractor 220 extracts basic information on one or more files according to an external command. Here, basic information on all files stored in a logical storage area (i.e., a folder or a directory) of the storage unit 210 may be extracted or basic information on only one or some files selected by a user may be extracted.

The basic information extracted by the basic information extractor 220 is transmitted to the information changer 250. The information changer 250 outputs the extracted basic information on one or more files through the display unit 260.

The command receiver 240 receives a display command signal regarding detailed information on a file from a user and transmits the display command signal to the information changer 250. The display unit 260 displays a file list including basic information on files. Then, a user may check the list and select a file from the list using a button, a joystick, a keypad, or a motion sensor provided in the apparatus. Here, basic information on the selected file may be transmitted to the information changer 250.

In this case, it may be preferable that the display command signal include the basic information on the selected file.

The information changer 250 receives the display command signal includes the basic information on the selected file and transmits it to the detailed information extractor 230.

Upon receiving the basic information on the selected file from the information changer 250, the detailed information extractor 230 extracts the detailed information of the selected file referring to the storage unit 210. The extracted detailed information may include at least one among a file format, a storage position, a file size, a play length, a creation date, and a last use date. When the detailed information is hierarchically stored in the storage unit 210 by levels, the detailed information extractor 230 may extract only part of the detailed information. The detailed information extractor 230 transmits the extracted detailed information to the information changer 250.

The information changer 250 changes the basic information of the selected file to the detailed information thereof through geometrical conversion. The geometrical conversion includes one among "turn-over", "horizontal spreading", "vertical spreading", and "spreading-in-parallelepiped".

Although the basic and detailed information on a file is stored in an icon or text format in the storage unit 210, it may be preferable that the information be displayed in a GUI format when it is output through the display unit 260. The information changer 250 performs geometrical conversion on a GUI output through the display unit 260. In detail, the information changer 250 performs the geometrical conversion on the basic information output in the GUI format to change it to the detailed information. The information changer 250 may perform different geometrical conversion according to the arrangement of basic information on files. For example, when basic information including the small icon and name of each file is arranged in a list form, the turn-over, the horizontal spreading, or the vertical spreading may be performed. When the basic information including only large icon of each file is arranged in a matrix form, the spreading-in-parallelepiped may be performed.

The information changer 250 may perform different geometrical conversion on the basic information according to the level of the detailed information stored in a hierarchical structure. For example, when the detailed information is classified into three levels, detailed information corresponding to a first class may be displayed using the turn-over, detailed information corresponding to a second class may be displayed using the horizontal spreading, and detailed information corresponding to a third level may be displayed using the vertical spreading.

The display unit 260 displays at least one among basic information on a file, a procedure of geometrical conversion of basic information into detailed information, and the detailed information on the file. The basic and detailed information may be displayed in the GUI format as described above. The basic and detailed information may be displayed in the form of a full image or a partial image, and text may be combined with the full or partial image. In addition, the display unit 260 may provide the GUI in a full image immediately before the geometrical conversion.

A user may select basic information on one file from the basic information list regarding files, which is output through the display unit 260, to change the basic information to detailed information. Here, since the basic information on the selected file is changed to the detailed information thereon through geometrical conversion, the user can perceive the interrelationship between the basic information and the detailed information on the file. In addition, when the detailed information has been stored hierarchically, a type of detailed information to be output can be predicted based on a type of geometrical conversion.

The basic information extractor 220 and the detailed information extractor 230 may be implemented in a single module having two functions or in two separate modules respectively.

FIG. 3 illustrates a "turn-over" among geometrical conversions, according to an exemplary embodiment of the present invention.

Referring to FIG. 3, it may be preferable that the turn-over be used when basic information GUIs 350 for respective files is displayed in a list form (S310). One selected among the basic information GUIs 350 may be turned over in a vertical or horizontal direction.

Here, the one among the basic information GUIs 350 may be selected by moving a selection cursor 370 while the list of the basic information GUIs 350 is fixed or by moving the list while the selection cursor 370 is fixed. Referring to FIG. 3, the list is moved while the selection cursor 370 is fixed. The list is moved downward and one among the basic information GUIs 350 selected by the selection cursor 370 fixed at the middle of a screen is changed.

The selected basic information GUI 350 is turned over in a windmill pattern 380 (S320) and is changed to a detailed information GUI 360 (S330). Here, the direction of the turn-over may be changed according to the moving direction of the selection cursor 370 or the list of the basic information GUIs 350. For example, when the selection cursor 370 moves up or the list moves down, a selected GUI is turned upside down or left-to-right and when the selection cursor 370 moves down or the list moves up, a selected GUI is turned downside up or right-to-left, or vice versa. Alternatively, geometrical conversion may be performed in a direction selected according to combination with a condition or selected randomly.

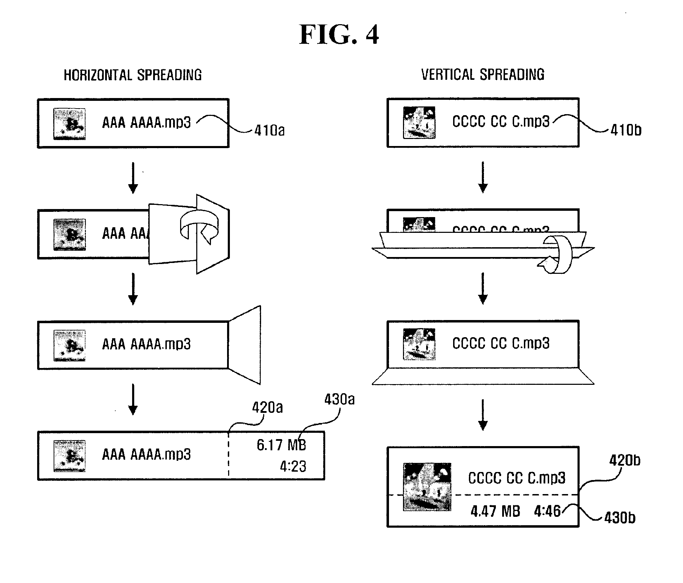

FIG. 4 illustrates "horizontal spreading" and "vertical spreading" among geometrical conversions, according to an exemplary embodiment of the present invention.

It may be preferable that the horizontal spreading or the vertical spreading be used when a basic information GUI 410a or 410b is displayed in a list form as is shown in FIG. 3. The selected basic information GUI 410a or 410b may be spread in the horizontal or vertical direction.

The basic information GUI 410a or 410b may be partially or entirely spread and detailed information 430a or 430b may be displayed. In FIG. 4, the basic information GUI 410a or 410b is partially spread in the horizontal or vertical direction and the detailed information 430a or 430b is displayed. Here, a spreading direction may be determined according to the disposition of the basic information GUI 410a or 410b. For example, when the basic information GUI 410a or 410b is disposed on the right side of a screen of the display unit 260 and the horizontal spreading is used, a dotted border line 420a or 420b between the basic information GUI 410a or 410b and the detailed information 430a or 430b may be formed on the left side of the basic information GUI 410a or 410b and spreading may be performed right to left.

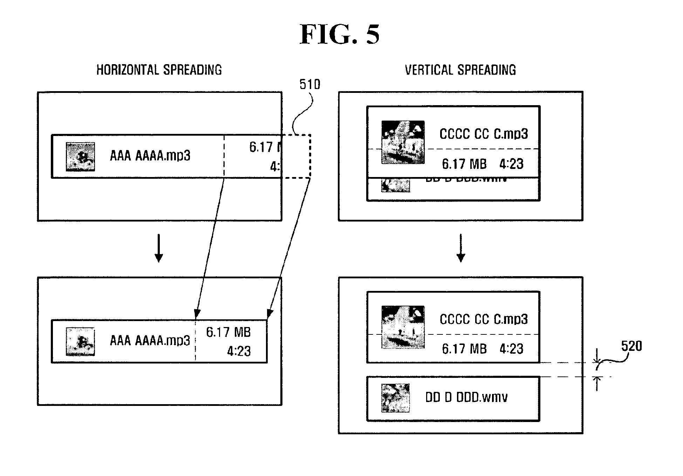

FIG. 5 illustrates a method of displaying information in the horizontal spreading and the vertical spreading, according to an exemplary embodiment of the present invention.

When the horizontal spreading is performed on a basic information GUI for a selected file, a horizontal length of a screen area that can be manifested by the display unit 260 may not be enough to display a detailed information GUI and an undisplayed portion 510 may occur. In this case, the detailed information GUI may be output to be fitted to a screen size of the display unit 260 considering the size of basic information text and the size of detailed information text. In addition, the position of the border line 420a may be determined considering the screen size.

When the vertical spreading is performed on a basic information GUI for a selected file, an adjacent basic information GUI may be covered with detailed information GUI for the selected file. When a basic information list regarding files is initially output, spare space for detailed information to be displayed may be secured. However, since higher readability is provided for a user when a predetermined space 520 between GUIs is maintained even after the vertical spreading is performed, it may be preferable to move the adjacent basic information GUI, which is positioned at a side on which the detailed information GUI is displayed, by the predetermined space 520.

In addition, the horizontal spreading may be performed right-to-left or left-to-right and the vertical spreading may be performed upward or downward. In any case, it may be preferable that a basic information GUI including a detailed information GUI is fitted to the screen size or an adjacent basic information GUI is moved.

Here, detailed information may have been hierarchically stored in the storage unit 210 and output of the detailed information may be performed according to its hierarchical level. In other words, a type of geometrical conversion changes according to a type of detailed information and the detailed information is output in stages according to a user's command. For example, basic information on a file and a creation date of the file is displayed using the turn-over; a file size and a last use date is displayed using the horizontal spreading; and a storage position of the file is displayed using the vertical spreading. Accordingly, a user can perceive a type of detailed information to be displayed based on the used geometrical conversion.

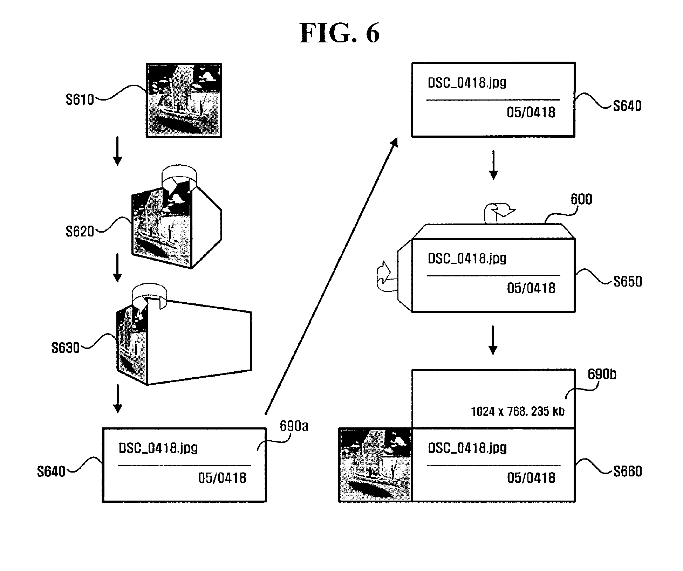

FIG. 6 illustrates "spreading-in-parallelepiped" according to an exemplary embodiment of the present invention.

It may be preferable that the spreading-in-parallelepiped is used when a basic information GUI for a file is output in a form of a large icon or preview (S610). A parallelepiped having the basic information GUI as one side rotates (S620 and S630) to display first detailed information 690a (S640) and another side 600 of the parallelepiped is spread (S650) to display second detailed information 690b (S660).

The rotating direction of the parallelepiped may change according to a type of the first detailed information 690a. In addition, the rotation (S620 and S630) and the spreading (S650) may be repeated to display other detailed information after the second detailed information 690b is displayed (S660).

The rotation (S620 and S630) and the spreading (S650) of the parallelepiped may result covering an area of an adjacent basic information GUI. Accordingly, it may be preferable to allocate a space when a detailed information GUI is displayed, instead of moving the adjacent basic information GUI as is shown in FIG. 5. In detail, when a basic information GUI for a particular file is selected, other basic information GUIs are made to disappear or the transparency of other basic information GUIs is adjusted to attract a user's sight to the procedure of geometrical conversion performed on the selected basic information GUI.

In addition, when a basic information GUI is selected, geometrical conversion may be performed immediately at the original position of the basic information GUI or after the basic information GUI is moved to the center of the screen.

The first detailed information 690a and the second detailed information 690b may have been hierarchically stored in the storage unit 210 and output thereof may be performed according to their hierarchical levels. In other words, different levels of detailed information types are respectively included in sides of the parallelepiped and displayed one by one according to the user's command. For example, basic information and a creation date of a file may be included in a side shown after the rotation of the parallelepiped; a file size and a last use date may be included in a side spread upward; and a storage position of the file may be included in a side spread downward. These different types of detailed information are displayed in stages according to the user's command.

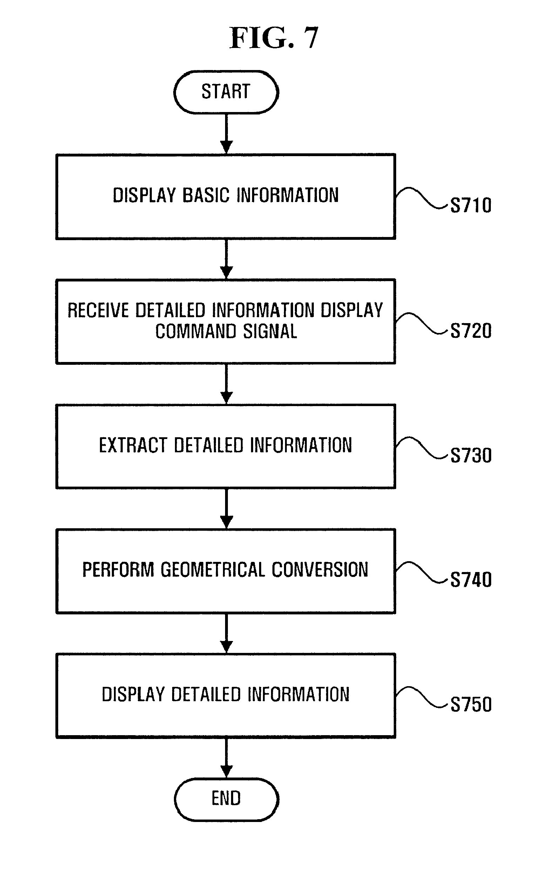

FIG. 7 is a flowchart of a method of displaying file information through the geometrical conversion of GUI according to an exemplary embodiment of the present invention.

A basic information list regarding files is extracted automatically or in response to a user's command input signal and is displayed through the display unit 260 in operation S710. Basic information may be displayed in a GUI format. In detail, the basic information may be displayed in the form of a full image or a partial image, and text may be combined with the full or partial image. Here, basic information on all files stored in a logical storage area (i.e., a folder or a directory) of the storage unit 210 may be extracted or basic information on only file selected by an external command may be extracted.

Then, the user may check the basic information list displayed through the display unit 260 and select a file from the basic information list using an input unit such as a button, a joystick, a keypad, or a motion sensor provided in an apparatus. Here, the input unit may be included in the apparatus or may be implemented as a separate module.

A detailed information display command signal generated by the input unit is received by the command receiver 240 in operation S720 and is transmitted to the information changer 250. It may be preferable to transmit basic information on the selected file to the information changer 250 at this time. Accordingly, the basic information on the selected file may be included in the display command signal.

The information changer 250 receives the display command signal including the basic information on the selected file and transmits it to the detailed information extractor 230.

Upon receiving the display command signal including the basic information on the selected file, the detailed information extractor 230 extracts detailed information on the selected file referring to the storage unit 210 in operation S730. The extracted detailed information may include at least one among a file format, a storage position, a file size, a play length, a creation date, and a last use date. When the detailed information is hierarchically stored in the storage unit 210 by levels, the detailed information extractor 230 may extract only part of the detailed information. The extracted detailed information is transmitted to the information changer 250. Upon receiving the extracted detailed information, the information changer 250 changes the basic information of the selected file to the received detailed information through geometrical conversion in operation S740. The geometrical conversion may be one among "turn-over", "horizontal spreading", "vertical spreading", and "spreading-in-parallelepiped".

Here, the detailed information may have been stored in the storage unit 210 in a hierarchical structure. In this case, the information changer may perform different types of geometrical conversion according to the levels of the detailed information.

After the geometrical conversion, the detailed information on the selected file is displayed on a screen in operation S750.

The displayed basic information and detailed information may be in a GUI format. In detail, the basic and detailed information may be displayed in the form of a full image or a partial image, and text may be combined with the full or partial image. In addition, the basic and detailed information may be displayed in a GUI format in a full image immediately before the geometrical conversion.

As described above, the apparatus and method for displaying file information through geographical conversion of a graphical user interface according to an embodiment of the present invention may provide the following advantages.

First, since detailed information on stored data is displayed through geometrical conversion of a GUI, a user can intuitively perceive a type of the detailed information to be displayed.

Second, since the detailed information on the data is distinctively displayed by levels using the geometrical conversion of a GUI, the user can also intuitively perceive the type of the detailed information related with an information level.

In concluding the detailed description, those skilled in the art will appreciate that many variations and modifications can be made to the exemplary embodiments without substantially departing from the principles of the present invention. Therefore, the disclosed exemplary embodiments of the invention are used in a generic and descriptive sense only and not for purposes of limitation.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus for displaying file information through geometrical conversion of a graphical user interface, the apparatus comprising:
a basic information extractor (220) operable to extract basic information on a file;
a detailed information extractor (230) operable to extract detailed information on the file according to a display command signal regarding the detailed information;
an information changer (250) operable to change the extracted basic information to the extracted detailed information using geometrical conversion; and
a display unit (260) operable to display at least one of the basic information on the file, a procedure of the geometrical conversion of the basic information, and the detailed information on the file.

2. The apparatus of claim 1, further comprising a command receiver (240) operable to receive the display command signal.

3. The apparatus of claim 1 or 2, wherein the basic information on the file comprises at least one of an icon of the file and a name of the file.

4. The apparatus of any preceding claim, wherein the detailed information on the file comprises at least one of a file format, a storage position, a file size, a play length, a creation date, and a last use date.

5. The apparatus of any preceding claim, wherein the geometrical conversion comprises at least one of turn-over, horizontal spreading, vertical spreading, and spreading-in-parallelepiped.

6. The apparatus of any preceding claim, wherein the information changer (250) is operable to perform different geometrical conversion on the basic information according to a level of the detailed information stored in a hierarchical structure when changing the basic information to the detailed information.

7. A method of displaying file information through geometrical conversion of a graphical user interface, the method comprising:
extracting basic information on a file;
extracting (S730) detailed information on the file according to a display command signal (S720);
changing the extracted basic information to the extracted detailed information using geometrical conversion (S740); and
displaying at least one of the basic information on the file, a procedure of the geometrical conversion of the basic information, and the detailed information on the file.

8. The method of claim 7, further comprising receiving the display command signal regarding the detailed information on the file.

9. The method of claim 7 or 8, wherein the basic information on the file comprises at least one among an icon of the file and a name of the file.

10. The method of any of claims 7-9, wherein the detailed information on the file comprises at least one among a file format, a storage position, a file size, a play length, a creation date, and a last use date.

11. The method of any of claims 7-10, wherein the geometrical conversion comprises at least one among turn-over, horizontal spreading, vertical spreading, and spreading-in-parallelepiped.

12. The method of any of claims 7-11, wherein the displaying includes performing different geometrical conversion on the basic information according to a level of the detailed information stored in a hierarchical structure when changing the basic information to the detailed information.
